# FASCICULE DE BREVET EUROPEEN

(11) **EP 2 185 830 B1**
(45) Date de publication et mention de la délivrance du brevet: **14.09.2011**
(21) Numéro de dépôt: 08773943.9
(22) Date de dépôt: 10.07.2008
(51) Int. Cl.: F16B 43/02

(54) **DISPOSITIF D'ASSEMBLAGE D'UN ELEMENT DE STRUCTURE ET D'UNE PLAQUE SUPERPOSEE**
VORRICHTUNG ZUR MONTAGE EINES STRUKTURELEMENTS UND EINER ÜBERLAGERTEN PLATTE
DEVICE FOR ASSEMBLING A STRUCTURAL MEMBER AND A SUPERIMPOSED PLATE

(30) Priorité: 01.08.2007 FR 0705634
(43) Date de publication de la demande: 19.05.2010
(73) Titulaire: A. Raymond et Cie., 38000 Grenoble (FR)
(72) Inventeur: MOUCHET, Steve, 38530 Chapareillan (FR)
(74) Mandataire: Rüttgers, Joachim
(86) Numéro de dépôt international: PCT/EP2008/005617
(87) Numéro de publication internationale: WO 2009/015748

(56) Documents cités:
- US-A- 3 135 154
- US-A1- 2004 101 384

## Description

### Domaine technique de l'invention

L'invention est relative à un dispositif d'assemblage d'un élément de structure et d'une plaque superposée, dispositif comportant les caractéristiques selon le préambule de la revendication 1 (US 3135154 A).

### État de la technique

Dans de nombreux domaines, notamment l'automobile, il est nécessaire d'assembler une pièce sur un élément de structure en réalisant une compression axiale dans une zone où une plaque solidaire de la pièce superpose l'élément de structure. Un système vis-écrou permet de comprimer la pièce, constitué par un organe de vissage (de type goujon) solidaire et en saillie de l'élément de structure et par un écrou de serrage. Une embase d'appui est intercalée entre l'écrou de serrage et la plaque de manière à répartir les efforts de compression.

Pour compenser les défauts de perpendicularité de l'organe de vissage par rapport à l'élément de structure, il a déjà été imaginé de créer des moyens d'appui orientables de l'écrou de serrage sur l'embase d'appui, de tels moyens autorisant un mouvement relatif de rotule de l'embase par rapport à l'écrou. Dans les techniques connues, ces moyens d'appui orientables sont constitués par une surface concave de contact de forme sphérique agencée dans la face inférieure de l'écrou et par une surface convexe de contact de forme complémentaire disposée en saillie de la face supérieure de l'embase.

Mais ce type de dispositif d'assemblage reste difficile à mettre en oeuvre car il est nécessaire, lors du montage, de maintenir la plaque contre l'élément de structure, tout en insérant l'embase sur l'organe de vissage et en boulonnant l'écrou jusqu'à serrage. Le nombre important d'opérations simultanées a pour conséquence directe d'abaisser les cadences d'assemblage au sein d'une ligne de production. D'autre part un écrou muni d'une surface concave de forme sphérique est très complexe à fabriquer, augmentant d'autant les coûts d'obtention.

### Objet de l'invention

L'invention a pour but de pallier à ces inconvénients en proposant un dispositif d'assemblage qui soit de fabrication simple et peu onéreuse et qui améliore la facilité de mise en oeuvre.

Le dispositif selon l'invention comprends les caractéristiques selon la revendication 1.

La fabrication d'un écrou de serrage selon l'invention est simplifiée car la fonction d'orientation de l'appui est affectée à la partie mâle d'accouplement dont c'est l'unique rôle. D'autre part, la présence des moyens de retenue permet d'assurer un préassemblage de l'écrou de serrage sur l'embase d'appui pour que l'opérateur puisse, dans un second temps, réaliser beaucoup plus simplement l'assemblage de la plaque sur l'élément de structure. Autrement dit, l'embase et l'écrou peuvent être livrées pré-assemblés entre eux.

D'autres caractéristiques techniques peuvent être utilisées isolément ou en combinaison :
- la partie mâle d'accouplement délimite intérieurement un taraudage complémentaire du tronçon fileté de l'organe de vissage et débouchant sur la surface convexe de contact de la tête,
- la partie mâle d'accouplement comporte un tronc ayant une extrémité liée à la tête en formant un épaulement,
- les moyens de retenue sont formés par une pluralité de pattes flexibles élastiquement déformables faisant saillie du contour de l'ouverture en direction de son centre, avec un décalage angulaire prédéterminé, lesdites pattes délimitant un cercle dont le diamètre est inférieur au diamètre du bord extérieur de l'épaulement,
- l'extrémité libre de chaque patte flexible comporte un chanfrein dirigé vers l'intérieur du logement,
- l'écrou de serrage et/ou l'embase d'appui est obtenu par moulage d'une matière plastique.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 est une vue en coupe axiale d'un exemple de dispositif d'assemblage selon l'invention,
- la figure 2 illustre en détail, en coupe axiale, l'embase d'appui et l'écrou de serrage du dispositif de la figure 1, à l'état pré-assemblé,
- la figure 3 est une vue en perspective du dispositif de la figure 1, sans l'élément de structure,
- la figure 4 est une vue en coupe axiale d'un deuxième exemple de dispositif d'assemblage selon l'invention.

### Description d'un mode préférentiel de l'invention

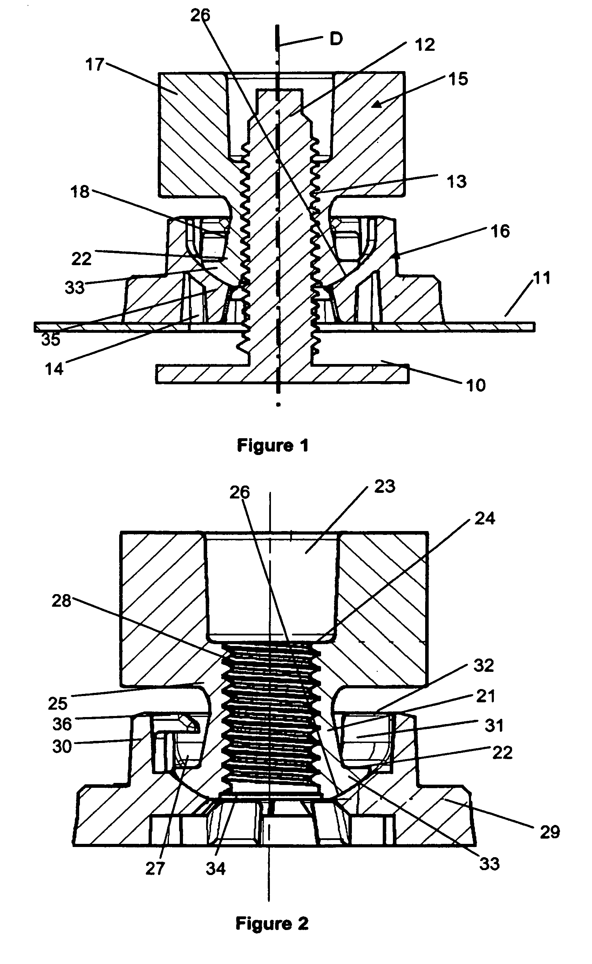

En référence aux figures 1 à 3, le premier exemple de dispositif d'assemblage selon l'invention permet l'assemblage d'un élément de structure 10 et d'une plaque 11. Le dispositif d'assemblage comporte un organe de vissage 12 tel qu'un goujon rapporté perpendiculairement sur l'élément de structure 10 par soudage. L'organe de vissage 12 est donc solidaire et en saillie de l'élément de structure 10. Dans une variante non représentée et lorsque l'élément de structure 10 permet un tel montage, l'organe de vissage 12 peut consister en un boulon muni d'une tête venant contre l'élément de structure 10 sur la face opposée à celle qui vient contre la plaque 11.

Dans tous les cas, l'organe de vissage 12 est muni d'un tronçon fileté 13 destiné à coopérer avec un écrou de serrage 15. L'organe de vissage 12 traverse axialement un orifice de passage 14 prévu dans la plaque 11 et fait saillie de la plaque 11, de manière que l'écrou de serrage 15 puisse être rapporté par l'extrémité libre de l'organe de vissage 12 jusqu'à pouvoir s'engager par vissage dans les filets du tronçon fileté 13. Sur la figure 1, l'écrou de serrage 15 est monté hélicoïdalement sur le tronçon fileté 13 de l'organe 12. Le réglage de l'effort de compression de l'embase 16 sur la plaque 11 se pratique par ajustement du couple de vissage appliqué à l'écrou de serrage 15.

L'organe de vissage 12 comporte un axe de révolution D. Les figures 1 et 2 représentent le premier exemple de dispositif d'assemblage en coupe axiale, c'est-à-dire selon un plan de coupe incluant l'axe D. L'axe D correspond également à l'axe de vissage de l'écrou de serrage 15 sur l'organe 12.

Le dispositif d'assemblage des figures 1 à 3 comporte en outre une embase d'appui 16 pour répartir les efforts de compression appliqués à la plaque 11. L'embase d'appui 16 est montée librement à coulissement sur l'organe de vissage 12 sous l'écrou de serrage 15. Il en résulte que l'embase d'appui 16 est interposée entre l'écrou de serrage 15 et la plaque 11.

L'axe D correspond également à la direction de l'effort de pressage appliqué par l'écrou de serrage 15 sur l'embase d'appui 16. En cas de défaut de perpendicularité entre l'axe de révolution D et la plaque 11, l'effort de pressage appliqué par l'écrou de serrage 15 sur l'embase d'appui 16 n'est pas perpendiculaire à la plaque 11. Pour être certain que l'embase d'appui 16 applique des efforts de compression perpendiculaires à la plaque 11 malgré le défaut de perpendicularité de l'axe D, le dispositif d'assemblage comporte des moyens d'appui orientables de l'écrou de serrage 15 sur l'embase d'appui 16. Ces moyens d'appui autorisent un mouvement relatif de l'embase d'appui 16 par rapport à l'écrou de serrage 15. Les moyens d'appui orientables seront compris à la lecture des paragraphes suivants.

L'écrou de serrage 15 comporte un organe d'actionnement 17 depuis lequel s'étend une partie mâle d'accouplement 18 en direction de l'embase d'appui 16. L'organe d'actionnement 17 est destiné à la transmission à l'écrou de serrage 15 d'un couple de vissage. Des moyens de manipulation sont prévus à cet effet sur l'organe d'actionnement 17 car l'écrou de serrage 15 est prévu, dans l'exemple, pour être manipulé à la main: l'organe d'actionnement 17 comporte un corps cylindrique 19 et deux ailettes 20 s'étendant radialement en saillie depuis la face extérieure du corps cylindrique 19. Le corps cylindrique 19 délimite intérieurement une cavité 23 ouverte du côté opposé à la partie mâle d'actionnement 18 et fermée par un fond 24 du côté de la partie mâle 18.

La partie mâle d'accouplement 18 est solidaire de l'écrou de serrage 15 et comporte un tronc 21 de forme tronconique disposé coaxialement par rapport au corps cylindrique 19. Ainsi, le tronc 21 est formé d'une paroi tronconique délimitant aux extrémités un cercle de plus petit diamètre et un cercle de plus grand diamètre. Le cercle de plus petit diamètre est rattaché au fond 24. La jonction entre le tronc 21 et l'organe d'actionnement 17 présente extérieurement un congé de raccordement 25 à bord incurvé pour limiter le phénomène de concentration de contraintes.

Le cercle de plus grand diamètre est, quant à lui, rattaché à une tête 22 ayant une forme de révolution. La tête 22 possède une surface convexe de contact 26 de forme sphérique, destinée à être en regard de l'embase d'appui 16. Le contour de la surface convexe 26 est rattaché au contour extérieur d'une surface plane de forme annulaire dont le contour intérieur est rattaché au cercle de plus grand diamètre du tronc 21. Autrement dit, le tronc 21 possède une extrémité liée à la tête 22 en formant un épaulement 27 constitué par la surface plane annulaire. Le contour extérieur de la surface plane annulaire constitue le bord extérieur de l'épaulement 27.

D'autre part, la partie mâle d'accouplement 18 délimite intérieurement un taraudage 28 débouchant à une extrémité sur la surface convexe de contact 26 et à son extrémité opposée sur la cavité 23. Le taraudage 28 traverse donc la tête 22, le tronc 21 et le fond 24 en s'étendant suivant l'axe de révolution de ces trois éléments. Dans une variante non représentée, il est possible de prévoir que le taraudage 28 ne débouche que du côté de la surface convexe de contact 26. Le taraudage 28 présente des caractéristiques complémentaires du tronçon fileté 13 en ce qui concerne le pas des filets et le diamètre nominal.

L'embase d'appui 16 comporte, quant à elle, un anneau rigide 29 destiné à venir contre la plaque 11 pour transmettre les efforts de compression. La face de l'anneau rigide 29 opposée à la plaque 11 supporte un logement d'accouplement 30 de forme sensiblement hémisphérique. Autrement dit, le logement d'accouplement 30 est solidaire de l'embase d'appui 16. Le logement d'accouplement 30 délimite une cavité 31 en formant une ouverture 32 en regard de l'écrou de serrage 15. Le logement d'accouplement 30 est muni intérieurement d'une surface concave de contact 33 de forme sphérique, destinée à être en regard de l'écrou de serrage 15. La surface concave de contact 33 est de forme complémentaire de la surface convexe de contact 26. Le centre de la surface concave de contact 33 est percé par une lumière 34. Une douille 35 s'étend depuis le contour de la lumière 34 en direction de la plaque 11, c'est-à-dire du côté opposé à la cavité 31. L'extrémité libre de la douille 35 est coplanaire avec la face de l'anneau rigide 29 destinée à venir contre la plaque 11.

Une pluralité de pattes flexibles 36 élastiquement déformables font saillie du contour de l'ouverture 32 en direction du centre de l'ouverture 32. Ces pattes flexibles 36 sont au nombre de quatre dans l'exemple illustré et sont réparties autour de l'ouverture 32 avec un décalage angulaire prédéterminé. Le nombre et la répartition des pattes flexibles peuvent néanmoins être variables. Les pattes flexibles 36 sont radiales et leurs extrémités libres délimitent un cercle dont le diamètre est inférieur au diamètre du bord extérieur de l'épaulement 27.

Les pattes flexibles 36 présentent une possibilité de flexion dans la direction axiale du logement d'accouplement 30 nettement supérieure dans un sens que de l'autre. Plus précisément, les pattes 36 peuvent fléchir vers la cavité 31 beaucoup plus facilement qu'en direction de l'extérieur du logement 30. Il est même possible de prévoir une possibilité unidirectionnelle de flexion des pattes 36.

Lorsque l'opérateur désire réaliser l'assemblage de l'élément de structure 10 et de la plaque 11 grâce au dispositif d'assemblage décrit ci-dessus, l'embase d'appui 16 et l'écrou de serrage 15 sont d'abord pré-assemblés entre eux. La partie mâle d'accouplement 18 est insérée axialement dans la cavité 31 délimitée par le logement d'accouplement 30, au travers de l'ouverture 32 (figure 2). Cette opération débute par la mise en contact de la surface convexe de contact 26 de la tête 22 avec les pattes flexibles 36. Le mouvement d'insertion axiale de la partie mâle d'accouplement 18 dans le logement d'accouplement 30 provoque ensuite la flexion des pattes flexibles 36 en direction de la cavité 31 moyennant une déformation élastique de telle manière que leurs extrémités libres s'éloignent axialement de l'ouverture 32. Comme les pattes 36 sont reliées à leurs extrémités opposées au contour de l'ouverture 32, ce mouvement de flexion des pattes 36 s'accompagne de l'écartement des extrémités libres dans la direction radiale jusqu'à délimiter un cercle dont le diamètre est supérieur au diamètre du bord extérieur de l'épaulement 27.

En fin d'insertion de la partie mâle d'accouplement 18, la tête 22 est entièrement située à l'intérieur de la cavité 31 du logement d'accouplement 30. L'élasticité des pattes flexibles 36 provoque automatiquement le retour de chacune des pattes 36 dans sa configuration naturelle. Les extrémités libres des pattes 36 délimitant à nouveau un cercle dont le diamètre est inférieur au diamètre du bord extérieur de l'épaulement 27, les pattes 36 assurent donc la retenue de la tête 22 dans le logement d'accouplement 30 : en cas de tirage axial de l'écrou de serrage 15 par rapport à l'embase d'appui 16, l'épaulement 27 de la tête 22 vient buter contre les pattes 36. Autrement dit, les pattes flexibles 36 constituent des moyens de retenue équipant l'ouverture 32 et bloquant automatiquement la partie mâle d'accouplement 18 dans le logement 30 après l'insertion de la tête 22 dans le logement 30 au travers de l'ouverture 32. Cette fonction de retenue des pattes 36 permet de comprendre l'importance d'avoir une possibilité de flexion des pattes 36 dans la direction axiale en direction de l'extérieur du logement 30 qui est faible voire nulle. Lorsqu'une telle possibilité est laissée, l'embase d'appui 16 peut être séparée de l'écrou de serrage 15 sous réserve de fournir un effort de tirage axial très élevé, évitant tout risque de séparation intempestive et involontaire.

Pour faciliter l'engagement de la tête 22 au travers de l'ouverture 32 équipée des moyens de retenue ci-dessus, il est possible de prévoir que l'extrémité libre de chaque patte flexible 36 comporte un chanfrein dirigé vers l'intérieur du logement d'accouplement 30, c'est-à-dire en direction de la cavité 31. Des tels chanfreins assurent également un bon positionnement (centrage) de la tête 22 dans l'ouverture 32 lors du pré-assemblage de l'écrou de serrage 15 et de l'embase d'appui 16.

L'embase d'appui 16 et l'écrou de serrage 15 sont alors pré-assemblés selon la configuration de la figure 2. Lorsque l'opérateur désire réaliser l'assemblage proprement dit de l'élément de structure 10 et de la plaque 11, la plaque 11 est mise en contact avec l'élément de structure 10 de telle manière que l'organe de vissage 12 s'étende au travers de l'orifice de passage 14. La plaque 11 est généralement solidaire d'une pièce (non représentée) destinée à être assemblée avec l'élément de structure 10 dans une zone où la plaque 11 de cette pièce est superposée à l'élément de structure 10.

Puis l'ensemble formé par l'embase d'appui 16 et l'écrou de serrage 15 pré-assemblés est rapporté sur l'extrémité libre de l'organe de vissage 12 en engageant l'embase d'appui 16 en premier. Pendant cette opération, l'organe de vissage 12 est inséré dans la lumière 34 et dans l'ouverture 32. Cet ensemble est translaté le long de l'organe de vissage 12 jusqu'à pouvoir engager le taraudage 28 de l'écrou de serrage 15 par vissage dans les filets du tronçon fileté 13. Sur la figure 1, l'écrou de serrage 15 est monté hélicoïdalement sur le tronçon fileté 13 de l'organe 12 et l'embase d'appui 16, déjà pré-assemblée avec l'écrou de serrage 15 de la manière indiquée ci-dessus, est intercalée entre la plaque 11 et l'écrou de serrage 15. L'organe de vissage 12 débouche dans la cavité 23.

Pour remplacer le vissage manuel, il est possible de prévoir que l'organe d'actionnement 17 ait une forme intérieure ou extérieure lui permettant de coopérer avec un outil d'actionnement (tournevis, clé plate ou à tête hexagonale ou similaire, outil mécanisé extérieur...) transmettant le couple de vissage à l'écrou de serrage 15.

Le vissage de l'écrou de serrage 15, durant lequel l'épaulement 27 est retenu par les pattes 36 contre l'effet de gravité, permet dans un premier temps de venir mettre en contact l'anneau rigide 29 contre la plaque 11. Cette opération de vissage est prolongée jusqu'à ce que la surface convexe de contact 26 de la tête 22 vienne en contact avec la surface concave de contact 33 du logement d'accouplement 30. Dès lors, l'effort de pressage appliqué par l'écrou de serrage 15 est transmis par la surface convexe 26 de la tête 22 à l'embase d'appui 16 au niveau de la surface concave 33. Cet effort de pression appliqué à la surface concave 33 se traduit par des efforts de compression de la plaque 11 par l'embase d'appui 16. Le réglage de l'effort de compression de l'embase 16 sur la plaque 11, et donc de la plaque 11 sur l'élément 10, se pratique par ajustement du couple de vissage appliqué à l'écrou de serrage 15.
La figure 1 représente un premier exemple de dispositif d'assemblage dans lequel l'axe D de l'organe de vissage 12 est perpendiculaire à la plaque 11.

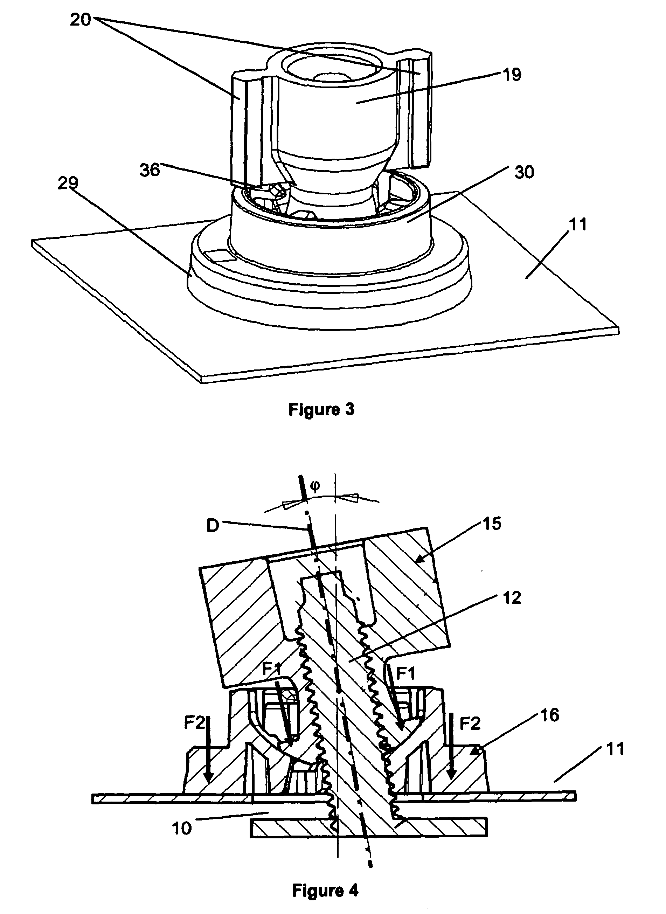

La figure 4 illustre, quant à elle, un deuxième exemple dans lequel l'axe D de l'organe de vissage 12 présente un angle ϕ par rapport à la droite perpendiculaire à la plaque 11. Dans cet exemple, dans un premier temps pendant le vissage de l'écrou de serrage 15, un seul côté (le côté gauche pour l'anneau rigide 29 de la figure 4) de l'anneau rigide 29 de l'embase d'appui 16 préalablement pré-assemblée avec l'écrou 15 vient en contact avec la plaque 11. À partir de ce moment, le vissage de l'écrou 15 sur l'organe 12 transmet à l'embase d'appui 16 un effort de pressage (voir flèches F1 sur la figure 4) dirigé selon l'axe D incliné d'un angle ϕ. Il en résulte, pendant le vissage, un mouvement relatif de rotule de l'embase d'appui 16 par rapport à l'écrou de serrage 15. Ce mouvement de l'embase d'appui 16 provient d'un glissement de la surface concave de contact 33 par rapport à la surface convexe de contact 26 et s'accompagne d'un rapprochement de l'anneau rigide 29 vers la plaque 11. À la fin du vissage de l'écrou de serrage 15 (voir figure 4), la totalité de l'anneau rigide 29 est en contact avec la plaque 11.

Dans cette configuration du dispositif d'assemblage, l'effort de pressage F1 appliqué par l'écrou de serrage 15 sur l'embase d'appui 16 est incliné d'un angle ϕ par rapport à la droite perpendiculaire à la plaque 11, tandis que les efforts de compression (voir flèches F2 sur la figure 4) appliqués par l'embase d'appui 16 sur la plaque 11 sont parallèles à la droite perpendiculaire à la plaque 11. L'effort presseur F1 appliqué par l'écrou de serrage 15 est donc incliné d'un angle ϕ par rapport aux efforts de compression F2 appliqués par l'embase d'appui 16.

Il ressort de ce qui précède que le dispositif d'assemblage qui comporte l'organe de vissage 12, l'écrou de serrage 15 et l'embase d'appui 16, comporte en outre des moyens d'appui orientables de l'écrou de serrage 15 sur l'embase d'appui 16 qui sont constitués par :
- une partie mâle d'accouplement 18 solidaire de l'écrou de serrage 15 et muni d'une tête 22 ayant une surface convexe de contact 26 de forme sphérique,
- un logement d'accouplement 30 solidaire de l'embase d'appui 16 et muni d'une surface concave de contact 33 ayant une forme sphérique complémentaire de ladite surface convexe 26,
- des moyens de retenue (les pattes flexibles 36) équipant une ouverture 32 du logement d'accouplement 30 et bloquant automatiquement la partie mâle d'accouplement 18 dans le logement d'accouplement 30 après l'insertion de la tête 22 dans le logement d'accouplement 30 au travers de ladite ouverture 32.

Ces moyens d'appui orientables de l'écrou de serrage 15 sur l'embase d'appui 16 assurent automatiquement, pendant le vissage de l'écrou 15, la formation d'un angle entre l'effort presseur F1 appliqué par l'écrou 15 et les efforts de compression F2 appliqués par l'embase 16 qui est égal à l'inclinaison ϕ de l'axe de révolution D de l'organe de vissage 12 par rapport à la droite perpendiculaire à la plaque 11. Ce fonctionnement automatique permet de s'assurer que les efforts de compression F2 appliqués par l'embase d'appui 16 sont uniformes et perpendiculaires à la plaque 11 en compensant tout défaut angulaire de perpendicularité de l'axe D par rapport à la plaque 11.

D'autre part, grâce aux moyens de retenue, l'embase d'appui 16 peut être livrée pré-assemblée avec l'écrou de serrage 15 avant l'assemblage proprement dit de la plaque 11 sur l'élément de structure 10. L'embase d'appui 16 est donc rendue inséparable de l'écrou de serrage 15. L'opérateur réalisant l'assemblage de la plaque 11 sur l'élément 10 peut alors placer simultanément l'embase d'appui 16 et l'écrou de serrage 15 sur l'organe de vissage 12, en une seule opération. L'avantage de cette méthode est de simplifier les chaînes finales d'assemblage qui sont généralement les plus coûteuses.

La fabrication d'un écrou de serrage 15 tel que décrit précédemment est simplifiée car la fonction d'orientation de l'appui est affectée à la partie mâle d'accouplement 18 dont c'est l'unique rôle. Cette fonction peut éventuellement séparée de la fonction de vissage, c'est-à-dire que les zones associées à ces deux fonctions peuvent être déportées l'une de l'autre et reliées par le tronc 21.

Enfin, de manière avantageuse mais non limitative, l'écrou de serrage 15 et/ou l'embase d'appui 16 est obtenu par moulage d'une matière plastique légèrement élastique, augmentant encore la facilité de fabrication.

## Revendications

1. Dispositif d'assemblage d'un élément de structure (10) et d'une plaque (11) superposée, dispositif comportant :
- un organe de vissage (12) solidaire et en saillie de élément de structure (10), muni d'un tronçon fileté (13) et traversant axialement un orifice de passage (14) prévu dans la plaque (11),
- un écrou de serrage (15) monté hélicoïdalement sur le tronçon fileté (13) de l'organe de vissage (12), portant un organe d'actionnement (17) depuis lequel s'étend une partie mâle d'accouplement (18) munie d'une tête (22) ayant une surface convexe de contact (26) de forme sphérique,
- une embase d'appui (16) montée librement sur l'organe de vissage (12) et interposée entre l'écrou de serrage (15) et la plaque (11), dotée d'un logement d'accouplement (30) muni d'une surface concave de contact (33) ayant une forme sphérique complémentaire de ladite surface convexe (26),
- des moyens de retenue (36) équipant une ouverture (32) du logement d'accouplement (30) et bloquant automatiquement la partie mâle d'accouplement (18) dans le logement d'accouplement (30) après l'insertion de la tête (22) dans le logement d'accouplement (30) au travers de ladite ouverture (32),
**caractérisé en ce que** la partie mâle d'accouplement (18) comporte un tronc (21) ayant une extrémité rattachée à l'organe d'actionnement (17) et une extrémité liée à la tête (22) en formant un épaulement (27) pour coopérer avec lesdits moyens de retenue (36).

2. Dispositif selon la revendication 1, **caractérisé en ce que** la partie mâle d'accouplement (18) délimite intérieurement un taraudage (28) complémentaire du tronçon fileté (13) de l'organe de vissage (12) et débouchant sur la surface convexe de contact (26) de la tête (22).

3. Dispositif selon l'une des revendications 1 et 2, **caractérisé en ce que** les moyens de retenue (36) sont formés par une pluralité de pattes flexibles (36) élastiquement déformables faisant saillie du contour de l'ouverture (32) en direction de son centre, avec un décalage angulaire prédéterminé, lesdites pattes (36) délimitant un cercle dont le diamètre est inférieur au diamètre du bord extérieur de l'épaulement (27).

4. Dispositif selon la revendication 3, **caractérisé en ce que** l'extrémité libre de chaque patte flexible (36) comporte un chanfrein dirigé vers l'intérieur du logement (30).

5. Dispositif selon l'une des revendications 1 à 4, **caractérisé en ce que** l'écrou de serrage (15) et/ou l'embase d'appui (16) est obtenu par moulage d'une matière plastique.

## Claims

1. Device for assembling a structural member (10) and a superposed plate (11), the device including:
- a threaded stud member (12) fastened to and projecting from the structural member (10), having a male threaded portion (13) and passing axially through an orifice (14) in the plate (11),
- a clamping nut (15) mounted helicoidally on the male threaded portion (13) of the threaded stud member (12), carrying an actuating member (17) from which extends a male coupling part (18) having a head (22) having a convex contact surface (26) of spherical shape,
- a bearing base (16) mounted freely on the threaded stud member (12), disposed between the clamping nut (15) and the plate (11) and having a coupling housing (30) having a concave coupling surface (33) having a spherical shape complementary to said convex surface (26),
- retaining means (36) fitted to an opening (32) in the coupling housing (30) and automatically locking the male coupling part (18) in the coupling housing (30) after insertion of the head (22) into the coupling housing (30) via said opening (32), **characterised in that** the male coupling part (18)
includes a trunk (21) having one end attached to the actuating member (17) and one end connected to the head (22) and forming a shoulder (27) adapted to co-operate with said retaining means (36).

2. Device according to claim 1, **characterised in that** the male coupling part (18) delimits internally a female screwthread (28) complementary to the male threaded portion (13) of the threaded stud member (12) and opening onto the convex coupling surface (26) of the head (22).

3. Device according to claim 1 or claim 2, **characterised in that** the retaining means (36) are formed by a plurality of elastically deformable flexible lugs (36) projecting from the contour of the opening (32) toward its centre with a predetermined angular offset, said lugs (36) delimiting a circle the diameter of which is less than the diameter of the outside edge of the shoulder (27).

4. Device according to claim 3, **characterised in that** the free end of each flexible lug (36) includes a chamfer facing toward the interior of the housing (30).

5. Device according to any of claims 1 to 4, **characterised in that** the clamping nut (15) and/or the bearing base (16) is or are produced by moulding a plastic material.

## Patentansprüche

1. Vorrichtung zur Montage eines Strukturelements (10) und einer darüber angeordneten Platte (11), wobei die Vorrichtung
- über ein Schraubteil (12), das einstückig und von dem Strukturelement (10) vorstehend ausgebildet ist, einen Gewindeabschnitt (13) aufweist und eine in der Platte (11) vorgesehene Durchgangsöffnung (14) axial durchquert,
- über eine Anzugsmutter (15), die schraubenartig auf dem Gewindeabschnitt (13) des Schraubteils (12) angebracht ist sowie ein Betätigungsteil (17) aufweist, von dem sich ein Kupplungssteckteil (18) erstreckt, das einen Kopf (22) mit einer konvexen Kontaktfläche (26) mit einer kugelartigen Form aufweist,
- über einen Stützsockel (16), der frei an dem Schraubteil (12) angebracht, zwischen der Anzugsmutter (15) und der Platte (11) angeordnet sowie mit einer Kupplungsaufnahme (30) versehen ist, die eine konkave Kontaktfläche (33) mit einer kugelartigen Form aufweist, die komplementär zu der konvexen Fläche (26) ist, und
- über Rückhaltemittel (36) verfügt, die an einer Öffnung (32) der Kupplungsaufnahme (30) angebracht sind und automatisch das Kupplungssteckteil (18) in der Kupplungsaufnahme (30) festhalten, nachdem der Kopf (22) durch die Öffnung (32) in die Kupplungsaufnahme (30) eingeführt ist,
**dadurch gekennzeichnet, dass** das Kupplungssteckteil (18) einen Rumpf (21) aufweist, bei dem ein Ende mit dem Betätigungsteil (17) und ein Ende mit dem Kopf (22) verbunden ist, wodurch eine Schulter (27) gebildet ist, um mit den Rückhaltemitteln (36) zusammenzuwirken.

2. Vorrichtung nach Anspruch 1, **dadurch gekennzeichnet, dass** das Kupplungssteckteil (18) innen ein Innengewinde (28) begrenzt, das komplementär zu dem Gewindeabschnitt (13) des Schraubteils (12) ist und auf der konvexen Kontaktfläche (26) des Kopfs (22) austritt.

3. Vorrichtung nach einem der Ansprüche 1 und 2, **dadurch gekennzeichnet, dass** die Rückhaltemittel (36) durch eine Anzahl von flexiblen, nachgiebig verformbaren Zungen (36) gebildet sind, die von dem Umfang der Öffnung (32) in Richtung ihrer Mitte mit einem vorbestimmten Winkelversatz vorstehen, wobei die Zungen (36) einen Kreis begrenzen, dessen Durchmesser kleiner als der Durchmesser des äußeren Rands der Schulter (27) ist.

4. Vorrichtung nach Anspruch 3, **dadurch gekennzeichnet, dass** das freie Ende jeder flexiblen Zunge (36) eine in Richtung des Inneren der Aufnahme (30) weisende Schrägkante aufweist.

5. Vorrichtung nach einem der Ansprüche 1 bis 4, **dadurch gekennzeichnet, dass** die Anzugsmutter (15) und/oder der Stützsockel (16) durch Gießen eines Kunststoffmaterials hergestellt sind/ist.
